# EUROPEAN PATENT SPECIFICATION

(11) **EP 3 470 953 B1**
(45) Date of publication and mention of the grant of the patent: **07.10.2020**
(21) Application number: 18000083.8
(22) Date of filing: 01.02.2018
(51) Int. Cl.: G05D 23/13, F16K 31/00, F16K 11/085, F16K 11/00

(54) **LOW-PRESSURE HIGH-FLOW SHOWER**
NIEDERDRUCK-DUSCHE MIT HOHEM DURCHFLUSS
DOUCHE HAUT DÉBIT À BASSE PRESSION

(30) Priority: 12.10.2017 CN 201710947248
(43) Date of publication of application: 17.04.2019
(73) Proprietor: Xiamen Solex High-tech Industries Co., Ltd., 361000 Fujian (CN)
(72) Inventor: LIN, Fangqi, Fujian 361000 (CN); WEI, Zhijian, Fujian 361000 (CN); HU, Lihong, Fujian 361000 (CN); CHEN, Wenxing, Fujian 361000 (CN)
(74) Representative: Verscht, Thomas Kurt Albert

(56) References cited:
- EP-A1- 2 977 657
- DE-A1-102010 018 671

## Description

### Technical field

The invention relates to a shower, and more particularly to a low-pressure high-flow shower.

### Background technology

Current shower, such as temperature control faucets, such as:CN101881345B, including a valve body, a center pipe,a connecting pipe, a flow valve core and a constant temperature valve core;the valve body, the center pipe and the connecting pipe are all hollow structures, the connecting pipe sleeve is in the central pipe, and the central pipe is inside the valve body,the central pipe is fixed in the valve body by the pressing nut,the flow valve core and the constant temperature valve core are respectively set at both ends of the central pipe, and the connecting pipe is set between the constant temperature valve core and the flow valve core;the first cavity is formed between the surface of the valve body and the outer surface of the central pipe, which is connected with the cold water inlet of the valve body and the cold water inlet of the central pipe, that is the cold water channel;the second cavity is formed between the inner surface of the central pipe and the outer surface of the connecting pipe, which is connected with the outlet of the valve body, that is the water outlet channel;the hot water inlet of the central pipe is directly connected with the hot water inlet of the valve body.The scheme has the following shortcomings:first, there are three waterways on the lateral cross section of the faucet, which is limited by the cross section of the faucet, which leads to the small section of the waterway;secondly, the end face relative rotation is used to switch, the switching port is small, the space is large, and the cross-section area of the waterway is small;thirdly, the above two points lead to the small water crossing area and low flow rate of the temperature control faucet.

With regard to the technological background attention is drawn to DE 10 2010 018671 A1 and to EP 2 977 657 A1.

### Summary of the invention

The invention provides a low-pressure high-flow shower, which overcomes the shortage of the shower in the background technology.

The present invention relates to a low pressure high-flow shower as defined in claim 1.

Preferred embodiments of the invention are disclosed in the dependent claims.

Compared with the background technology, the technical solution has the following advantages:
Temperature control valve core is installed on a fixed part and a single water port and a water inlet are aligned and connected, and the ohter water inlet and the other single water port are connected by waterway through ,the switching valve core includes a rotating wall, the inner hole of the rotating wall is connected to the water mixing port of the temperature control valve core,rotate the rotating wall so that the water through hole can be switched to align at least one of the two water outlets. Through the use of straight-through structure, the cross-section of the fixed part can only be set a waterway and a rotating wall cavity, mixing water can be directly through the rotary wall cavity and then out from the water outlet, in case of the same size of the main body, through the setting of the waterway structure and switching mechanism it can achieve maximum flow capacity, can meet the requirements of low-pressure and high-flow.

The temperature control valve is loaded into the fixed part from the first end, and a single water port and the first water inlet are aligned and connected,the layout is reasonable, and the water passing area of the waterway is increased, it can achieve the requirement of low-pressure high-flow .

The shaft sleeve is fitted into the installation slot of the shell part and the first through hole and the second through hole are aligned with each other and the water outlet joint is inserted into the first through hole from the second through hole and the shaft sleeve and the shell part are positioned axially ,the layout is reasonable ,the assembly is easy, it can achieve lock positioning through the structural design.

A sealing ring is arranged between the inner end surface of the water outlet joint part and the circumferential surface of the rotating wall, and the rotating wall is pressed through the sealing ring to play the role of the sealing water wayl, which can avoid the influence of water pressure and the problem of poor sealing.

### BRIEF DESCRIPTION OF THE DRAWINGS

This invention is further explained in conjunction with the accompanying drawings and embodiments.
Fig. 1 is a three-dimensional diagram of the shower of the embodiment 1.
Fig. 2 is a schematic diagram of the stereoscopic decomposition of the shower of the embodiment 1.
Fig. 3 is a schematic diagram of a stereoscopic decomposition of a part of the shower of the embodiment 1.
Fig. 4 is the first section schematic view of the shower of the embodiment 1.
Fig. 5 is the second schematic sectional view of the shower of the embodiment 1.
Fig. 6 is the third schematic sectional view of the shower of the embodiment 1,at this time the water run out of the first water outlet.
Fig. 7 is the third schematic sectional view of the shower of the embodiment 1,at this time the water run out of the second water outlet
Fig. 8 is the third schematic sectional view of the shower of the embodiment 1,at this time water the water is closed.
Fig. 9 is a three-dimensional diagram of the shower of the embodiment 2.
Fig. 10 is a schematic diagram of the stereoscopic decomposition of a shower of the embodiment 2.
Fig. 11 is a schematic diagram of a stereoscopic decomposition of a part of the shower of the embodiment 2.
Fig. 12 is is the first schematic sectional view of the shower of the embodiment 2.
Fig. 13 is is the second schematic sectional view of the shower of the embodiment 2.
Fig. 14 is is the third schematic sectional view of the shower of the embodiment 2,at this time the water run out of the first water outlet.
Figure 15 is the third schematic sectional view of the shower of the embodiment 2,at this time the water run out of the second water outlet..
FIG. 16 is the third schematic sectional view of the shower of the embodiment 2,at this time the water is closed..

### DETAILED DESCRIPTION OF THE PREFERRED EMBODIMENTS

### Embodiment 1

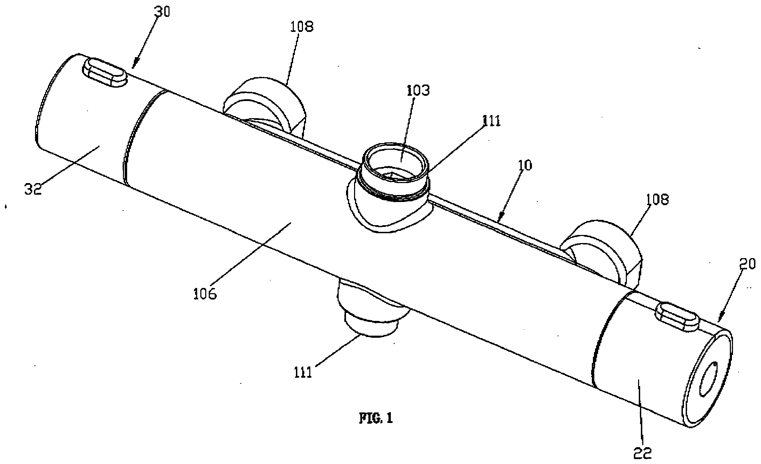

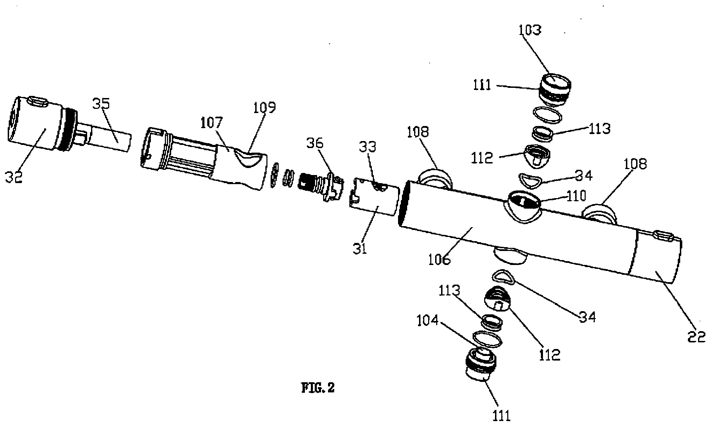

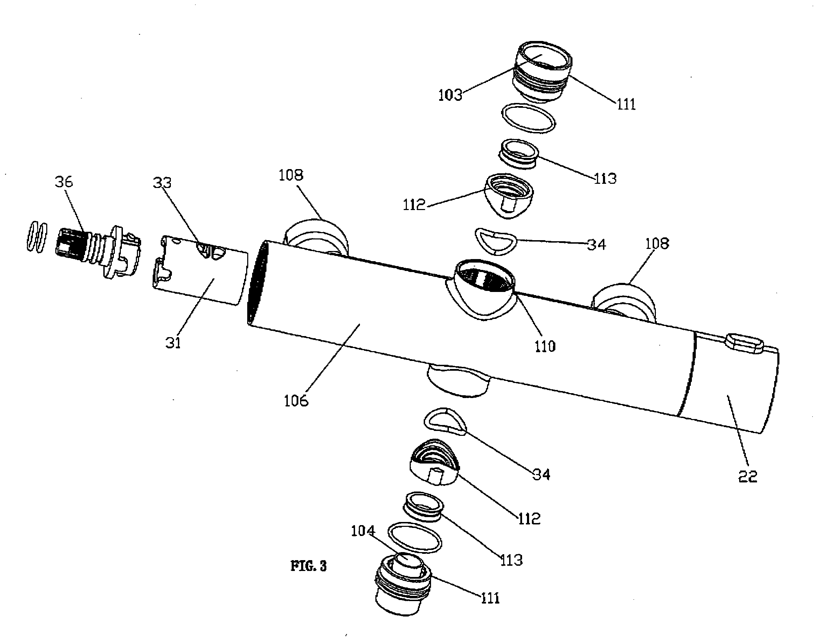

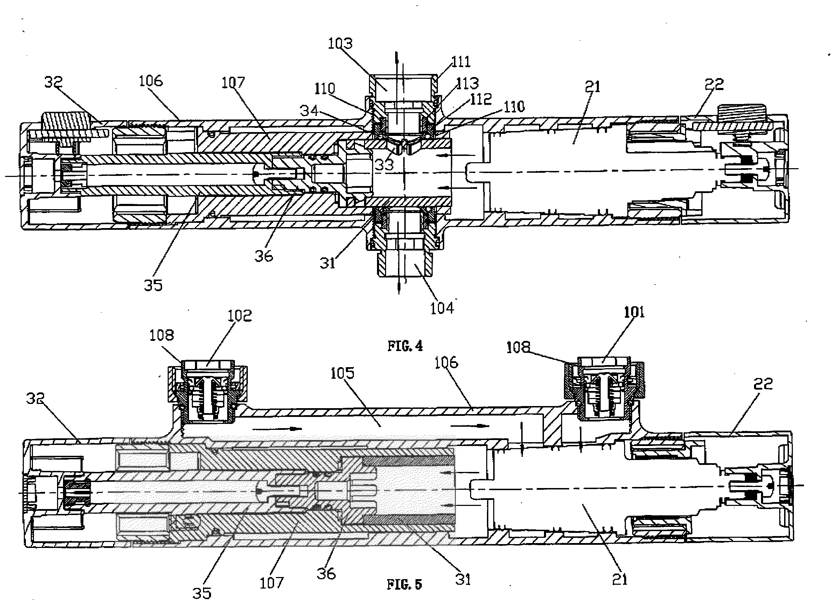

Please refer to fig. 1 to 8, low-pressure high-flow shower, including fixed part 10, temperature control valve 20 and switching valve 30.

The fixed part 10 has a first end and a second end, and the fixed part 10 has a first water inlet 101, a second water inlet 102, a first water outlet 103 and second water outlet 104.The first water inlet 101 and the second water inlet 102 are spaced along the length of the fixed part 10, and the first water inlet 101 and second water inlet 102 are respectively arranged at the first end and the second end, and the two water inlet is connected with cold water and hot water respectively. The first water outlet 103 and the second outlet 104 are between the two water inlet 101 , 102 and are arranged circumferentially along the fixed part 10 ;among them,the first water outlet 103 and the second water outlet 104 are radially symmetrically arranged, and the first water outlet 103 and the second water outlet 104 are symmetrically located on both sides of a connecting line of the two water inlet 101, 102.

The temperature control valve 20 has a temperature control valve core 21 and a temperature control handle 22 drivingly connected to the temperature control valve core 21. The temperature control valve core 21 has two single water ports and a water mixing port. Two single water ports of the temperature control valve core 21 are arranged along the length of the temperature control core 21 on the outer peripheral wall of the temperature control valve core 21, the mixing water port of the temperature control valve core 21 is arranged toward the left of the temperature control valve 21 (in the figure); the switching valve 30 has a switching valve core and a switching handle 32 ,the switching valve core includes a rotating wall 31 rotatingly connected within the fixed part 10, the switching handle 32 drivingly connecting the rotating wall 31.

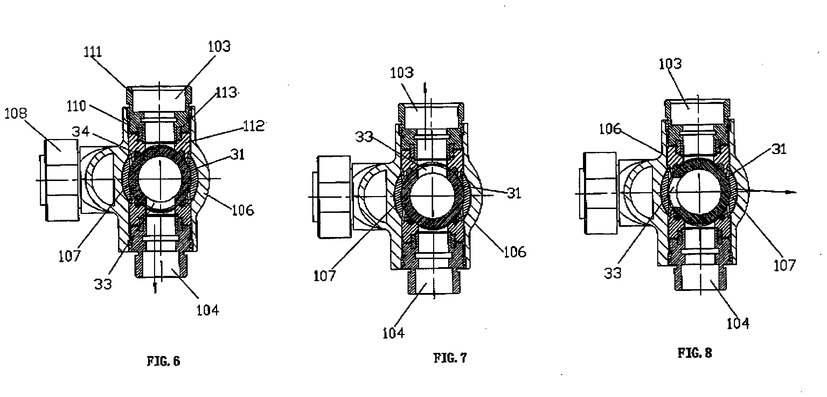

The temperature control valve core 21 is loaded into the fixed part 10 from the first end, and a single water port and the first water inlet 101 are aligned and connected. The second water inlet 102 and the other single water port are connected through the waterway through 105. the rotating wall 31 is located between the two water inlet 101, 102, the two water outlet 103, 104 circumferentially spaced along the rotating wall 31 , the inner hole of the water temperature control valve core 21 is communicated with the water mixing port of the temperature control valve core 21.The rotating wall 31 is provided with a through hole 33 penetrating the inside and the outside of the rotary wall 31,by rotating the rotary wall 31, the through hole 33 can be switched and aligned with either of the two water outlets 103, 104 or not, as shown in FIG. 6, FIG. 7 and FIG. 8 . The temperature control handle 22 is rotatably connected to the first end of the fixed part 10 to drive the temperature control valve core to perform water temperature regulation. The switching handle 32 is rotatably connected to the second end of the fixed part 10 to drive the rotary wall 31 to rotate to achieve the switching of the water runing out of the first water outlet or the second water outlet or water closed.

The fixed part 10 includes a copper main body 106 with a through hole and a first shaft sleeve 107.

The copper main body 106 is provided with a first water inlet 101 and a second water inlet 102. The pipe wall (the wall body surrounding the through hole) of the copper main body 106 is formed with the above waterway through 105. In this embodiment ,the water inlet is also provided with a water inlet joint 108. The temperature control valve core 21 is attached inside the copper main body 106 , the single water port and the inner end port of the first water inlet 101 are aligned and connected; the other single water port and the end port of the waterway through 105 are aligned and connected.

The first shaft sleeve 107 is provided with two first through holes 109 which circumferentially spaced and penetrating inside and outside; the copper main body 106 is provided with two second through holes 110 which circumferentially spaced and penetrating inside and outside.The first shaft sleeve 107 is fitted to be inserted into the through hole of the copper main body 106 and the first through hole 109 and the second through hole110 are aligned with each other; the water ouelet joint part 111 is inserted into the first through hole 109 from the second through hole 110 and axially locates the first shaft sleeve 107 and a copper main body 106. The inner hole of the water outlet joint part 111 forms the water outlet mentioned above. The first sealing ring 34 is disposed between the inner end surface of the water outlet joint part 111 and the outer peripheral surface of the rotating wall 31. The first sealing ring 34 is pressed by the fixing of the water outlet joint part 111 and the second through hole 110. In this embodiment, the water outlet joint part 111 includes a water outlet joint, a fixing sleeve 112 and a sealing gasket 113. The first sealing ring 34 is disposed between the fixing sleeve 112 and the rotating wall 31, and the sealing gasket 113 is connected between the fixing sleeve and the water outlet joint, the water outlet joint are bolted to the second through hole 110. The surface of the sealing gasket is concave so as to provide a larger compressible amount, which avoids over-tightening between the fixed sleeve and the rotating wall when the fixed sleeve is pressed to seal the rotating wall ,with a less hand-switching feeling.

The first shaft sleeve 107 has a stepped sleeve part having a large hole part, a small hole part, and a stepped ring wall connected to the large hole part and the small hole part, the two first through holes 109 are provided in the large hole part, the rotary wall 31 is rotatably fitted in the large hole part, and the small hole part is provided with a counterbore. The switching valve 30 further has a switching shaft 35 ,the switching shaft 35 is inserted through the small hole part of the first shaft sleeve 107 , the inner end of the switching shaft 35 is fixedly connected to the rotating wall 31 via the joint 36 and the outer end of the switching shaft 35 is fixedly connected to the switching handle 32. The joint 36 has a sealing part 361, a barb and a locking part are fixed on both sides of the sealing part 361; the barb from the inside out hooked on the rotating wall 31 to fixedly connect the joint and the rotating wall together, the sealing part 361 seals the right port of the rotating wall 31, the locking part is inserted into the small hole part, and a sealing ring is disposed between the locking part and the small hole part. One end of the switching shaft 35 is fixed to the locking part, and the tip end of the switching shaft 35 abuts on the end surface of the counterbore . The seal part of the joint 36 abuts on the stepped ring wall.

### embodiment 2

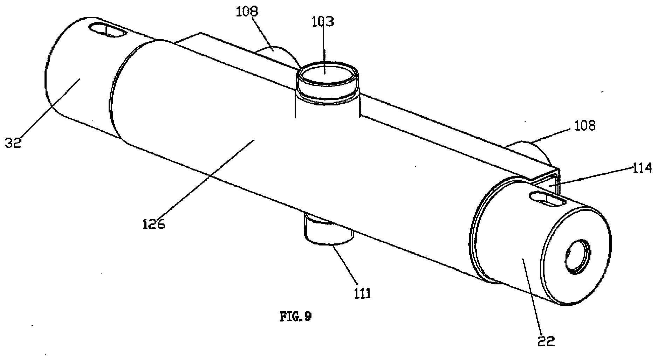

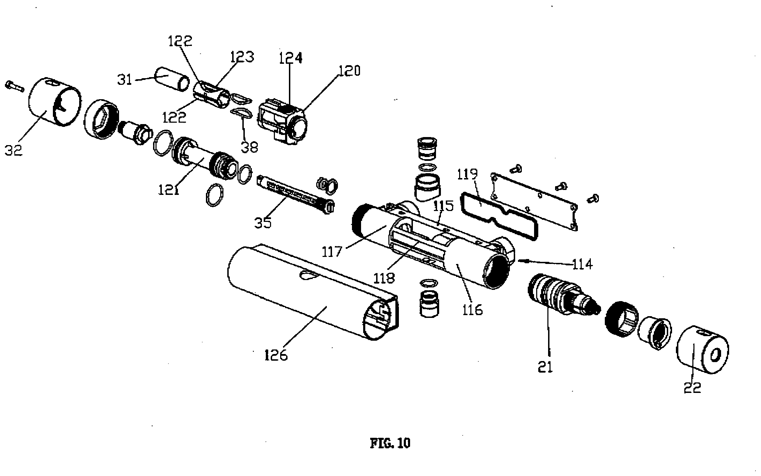

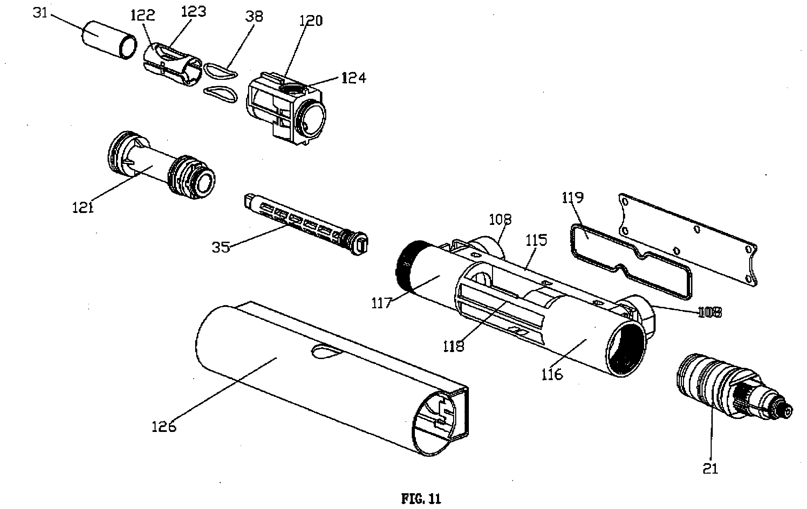

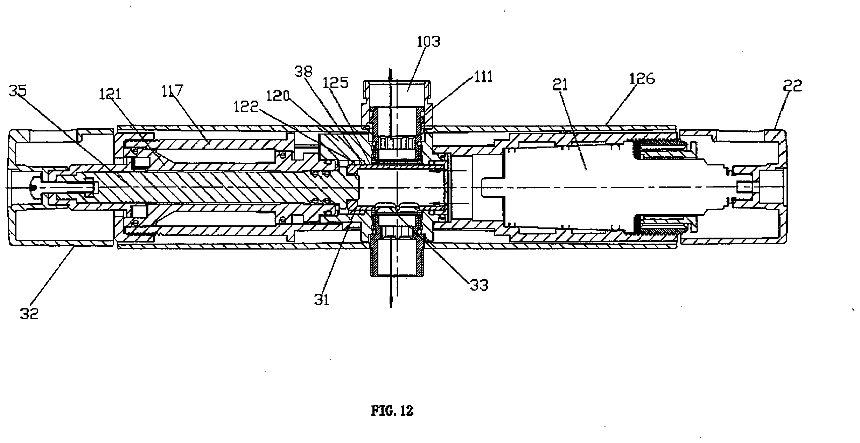

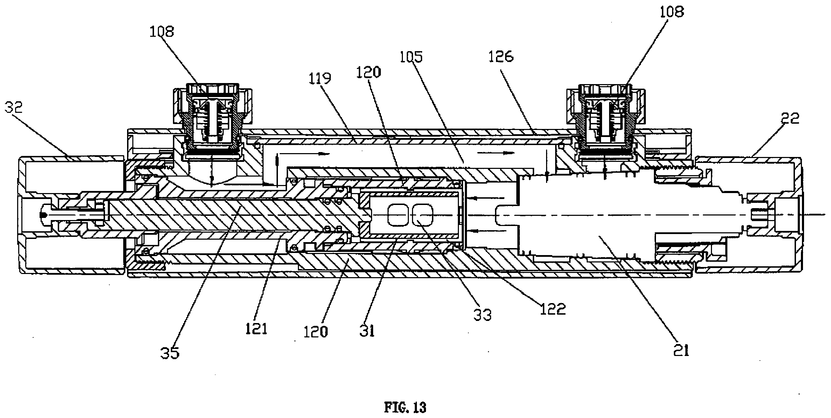

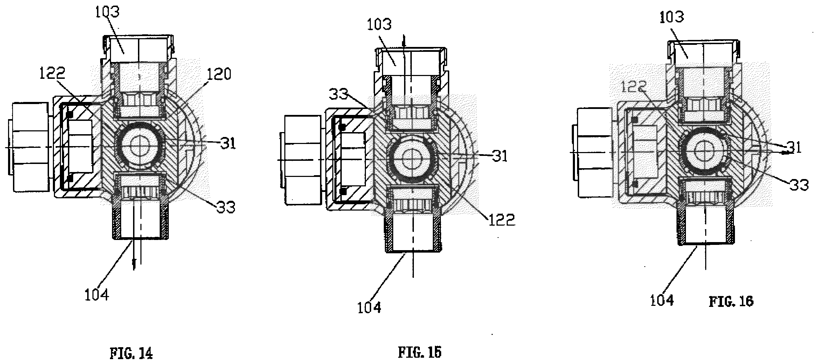

Refer to fig. 9 to 16, Please refer to FIG. 9 to FIG. 16, which is different from the first embodiment:.

The fixed part 10 includes a main body 114 ,the main body 114 includes a connecting part 115 and a first installion sleeve 116 and a second installion sleeve 117 which are fixedly connected to the front of the connecting part. The first installing sleeve and the second installing sleeve are also provided a fixing frame 118 , the back surface of the connecting part 115 are provided with a first water inlet 101 and a second water inlet 102 , a water sink is recessed on the back of the connecting part 115, one end of the water sink is connected to the second water inlet, and the other end of bottom of the water sink is penetrated to the inner wall of the first installing sleeve. The notch of the water sink is sealed and fixed with a cover plate 119, the water sink forms the waterway. The first water inlet penetrates the inner wall of the first installing sleeve.

The temperature control valve core 31 is installed in the first installing sleeve 116, the single water port and the first water inlet 101 are aligned and connected; the end port of the other s
ingle water port and the water sink is aligned and connected.

The fixed part 10 also includes a valve body 120 and a second shaft sleeve 121, the valve body 120 is fixed in the fixed frame 118, and the valve body 120 has an inner cavity;another two water outlet joint part 111 fixed is fixed to the valve body 120 and extend out of the main body 114;the rotating wall 31 can be rotatably connected to the inner cavity of the valve body 120.

The second shaft sleeve 117 passes through the second installing sleeve 117 and abuts against the valve body 120. The temperature controlle handle 22 is rotatably attached to the first installing sleeve 116. The switching handle 32 is rotatably attached to the second installing sleeve 117 . The switching shaft 35 passes through the second shaft sleeve 117 and the inner end is fixedly connected with the rotating wall 31,the outer end is fixedly connected with the switching handle 32. The switch shaft 35 seals the end port of the rotatng wall.

The valve body 120 comprises a inner support sleeve, the inner support sleeve comprises two separate semicircular arc plates 122, and a third through hole 123 is opened on the semicircular arc plate 122,the valve body 120 is provided with two fourth through holes 124 penetrating inner cavity, the periphery of the inner end of the fourth through hole 124 of the valve body 120 extends inwardly to form a ring convex 125 ;the supporting sleeve is fixedly arranged on the inner cavity of the valve body and between valve body and rotating wall, the ring convex is inserted into the third through hole, the water outlet joint part is inserted into the fourth through hole , the inner hole of the water outlet joint forms the water outlet, the rotating wall is adapted to slide between two semicircular arc plates. A second seal ring 38 is disposed between the third through hole wall and the ring convex, and the seal ring also seals the support sleeve and the valve body.

As required, the shell 126 is also included, such as a copper shell, which is fixed to the main body 114.

The invention may be summarized as follows: The invention discloses a low-pressure high-flow shower, comprising a fixed part, a temperature control valve and a switching valve;the fixed part has two water inlets and two water outlets, the temperature control valve has a temperature control valve core,and the switching valve has a switching valve core; the temperature control valve core has two single water ports and a mixing water port, ;the temperature control valve core is installed in the fixed part and one single water port is aligned with and connected with a water inlet, and the other water inlet and the other single water port are connected by the waterway through ;the switching valve core comprises a rotating wall which is rotatably connected with the fixed part, the rotating wall is located between the two water inlets, the two water outlets are circumferentially spaced with respect to the rotating wall, the inner hole of the rotating wall is connected with the mixing water outlet of the temperature control valve core , a through hole penetrating both inside and outside is arranged on the rotating wall, the through hole can be switched to align with at least one of the two water outlets by rotating the rotating wall..lt has the following advantages:Under the same size of the main body, through the above waterway structure setting and switching mechanism it can achieve maximum flow rate, and can meet the requirements of low-pressure high-flow.

## Claims

1. The low-pressure high-flow shower, comprising a fixed part (10), a temperature control valve (20) and a switching valve (30); the fixed part (10) has two water inlets (101, 102) and two water outlets (103, 104), and the two water inlets (101, 102) are spaced along the length direction of the fixed part (10), and the two water outlets (103, 104) are between the two water inlets (101, 102) and circumferentially spaced along the fixed part (10), the temperature control valve (20) has a temperature control valve core (21), and the temperature control valve core (20) has two single water ports and a mixing water port, and the switching valve (30) has a switching valve core; wherein the temperature control valve core (21) is installed in the fixed part (10) and one single water port is aligned with and connected with a water inlet, and the other water inlet and the other single water port are connected by a through waterway (105);the switching valve core comprises a rotating wall (31) which is rotatably connected with the fixed part (10), the rotating wall is located between the two water inlets (101, 102), the two water outlets (103, 104) are circumferentially spaced with respect to the rotating wall (31), the inner hole of the rotating wall is connected with the mixing water outlet of the temperature control valve core (21), a through hole (33) penetrating both inside and outside is arranged on the rotating wall, the through hole (33) can be arranged to align with at least one of the two water outlets by rotating the rotating wall (31).

2. The low-pressure high-flow shower according to claim 1, wherein: two single water ports of the temperature control valve core (21) are arranged along the length direction of the temperature control valve core (21) on the peripheral wall of the temperature control valve core (21), and the mixing water port of the temperature control valve core is arranged on one end of temperature control valve core (21) toward to the rotating wall (31).

3. The low-pressure high-flow shower according to claim 1 and/or 2, wherein: the fixed part (10) is provided with a first end and a second end, and the two water inlets (101, 102) are respectively the first water inlet (101) and the second water inlet (102), and the first water inlet (101) and the second water inlet (102) are respectively arranged at the first end and the second end, the temperature control valve core (21) is loaded into the fixed part (10) from the first end, and a single water port and the first water inlet are aligned and connected, the through waterway (105) connects to the second water inlet (102) and the other single water port, the temperature control valve (20) also has a temperature control handle (22) connected to the temperature control valve core (21), and the temperature control handle (22) is connected to the first end of the fixed part (10), the switching valve (30) also has a switching handle (32) connected to the rotating wall (31), the switching handle (32) is connected to the second end of the fixed part (10).

4. The low-pressure high-flow shower according to claim 3, wherein: the switching valve (30) also has a switching shaft (35), which is inserted in the second end of the fixed part (10) and the inner end of the switching valve is fixed with the rotating wall (31), and its external end is fixedly connected to the switching handle (32).

5. The low-pressure high-flow shower according to any one or more of claims 1 to 4, wherein: the fixed part (10) comprises a copper main body (106) with a through hole, and the copper main body (106) is provided with a first water inlet (101) and a second water inlet (102), and the pipe wall of the copper main body is formed with the through waterway; the temperature control valve core (21) is installed in the through hole of the copper main body (106), and the single water port and the inner port of the first water inlet are aligned and connected, the other single water port is aligned and connected with the end of the through waterway (105).

6. The low-pressure high-flow shower according to claim 5, wherein: the fixed part (10) also comprises a shaft sleeve (107), the shaft sleeve (107) is provided with two circumferentially spaced first through holes (109) penetrating the shaft sleeve outside and inside; the copper main body (106) is provided with two circumferentially spaced second through holes (110) penetrating the copper main body outside and inside; the shaft sleeve (107) is fitted into the copper main body (106) and is aligned with the first through hole and the second through hole; a water outlet joint (111) is also provided, which partly inserts into the first through hole from the second through hole, and positions the shaft sleeve (107) and the copper main body (106) in the axial direction; and wherein the inner hole of the water outlet joint (111) forms the water outlet.

7. The low-pressure high-flow shower according to any one or more of claims 1 to 6, wherein: the fixed part (10) comprises a shell part and an shaft sleeve, the shell part is equipped with an installation slot, the shaft sleeve is provided with two circumferentially spaced first through holes; the shell part is provided with two circumferentially spaced second through holes; the shaft sleeve is fitted into the installation slot of the shell part, and the first through hole and the second through hole are aligned; the water outlet joint is also provided, which partly inserts into the first through hole from the second through hole, and position shaft sleeve and the shell part; the inner hole of the water outlet joint forms the water outlet.

8. The low-pressure high-flow shower according to claim 6 and/or 7, wherein: the rotating wall (31) is adapted to be rotatably connected within the shaft sleeve (107).

9. The low-pressure high-flow shower according to any one or more of claims 6 to 8, wherein: the switching valve (30) also has a switching shaft (35), which is inserted from the shaft sleeve (107) and fixedly connected with the inner end to the rotating wall (31), and the outer end is fixedly connected to the switching handle (32).

10. The low-pressure high-flow shower according to any one or more of claims 6 to 9, wherein: the shaft sleeve (107) has a ladder sleeve part, and the ladder sleeve part has a large hole part, a small hole part and a stepped ring wall connected to the large hole part and the small hole part, and the two first through holes are arranged on the large hole part, and the rotating wall is fitted to connect to the inner of the large hole part; the switching valve also has a switching shaft, which extends from a small hole part to a large hole part and is fixed to the rotating wall, and the stepped ring wall also locates the axial position of the rotating wall (31).

11. The low-pressure high-flow shower according to claim 9 and/or 10, wherein: the switching shaft (35) and the rotating wall (31) are connected by a joint (36), which is sealed and fixed to the end port of the rotating wall, and the inner end of the switching shaft is fixed with the joint (31).

12. The low-pressure high-flow shower according to any one or more of claims 1 to 11, wherein: a sealing ring (34) is arranged between the inner end surface of the water outlet joint part (111) and the outer peripheral surface of the rotating wall (31).

13. The low-pressure high-flow shower according to claim 12, wherein: the water outlet joint part (111) comprises a water outlet joint, a fixed sleeve (112) and a sealing gasket (113), and the sealing ring is arranged between the fixed sleeve (112) and the rotating wall (31), and the gasket (113)is connected between the fixed sleeve (112) and the water outlet joint, and the outlet joint is connected to the second through hole (110), and the outer surface of the gasket (113) is concave.

14. The low-pressure high-flow shower according to any one or more of claims 1 to 3, wherein: the fixed part (10) comprises a main body (114), the main body (114) includes a connecting part (115) and the first installing sleeve (116) and the second installing sleeve (117) spaced fixed on the positive face of the connecting part (115), the back of the connecting part (115) is arranged with the first water inlet and the second water inlet, the back of the connecting part (115) is also recessed with a sink, the sink is connected with second water inlet, the other end of the bottom of the sink is penetrated through the inner wall of the first installation sleeve, the notch of the sink is fixedly connected with a cover plate (119), the sink constituting thus a through waterway ; the first water inlet runs through the inner wall of the first installation sleeve, the temperature control valve core is installed in the first installation sleeve, and the single water port and the inner end of the first inlet are aligned and connected, whereas the end of the other single water port is aligned and connected with the sink.

15. The low-pressure high-flow shower according to claim 14, wherein: a fixed frame (118) is also fixed between the first installation sleeve (116) and the second installation sleeve (117), the fixed part (10) also includes a valve body (120), which is fixed in the fixed frame (118), and the valve body (120) has an inner cavity, the water outlet joint part is fixedly installed in the valve body (120) and extends out of the body, and the inner hole of the water outlet joint part forms the water outlet, and wherein the rotating wall can be rotatably connected with the inner of the valve body cavity.

16. The low-pressure high-flow shower according to claim 15, wherein: the fixed part (10) also includes a shaft sleeve, which is fixed through the second installation sleeve (117) and is attached to the valve body (120), the temperature control handle (22) is rotatably connected to the first installation sleeve (116), and the switching handle is rotatably connected to the second installation sleeve.

17. The low-pressure high-flow shower according to claim 16, wherein: the switching valve also has a switching shaft (35), which passes through the shaft sleeve (117) and the inner end of which is fixed with the rotating wall (31), and its outer end is fixed to the switching handle (32).

18. The low-pressure high-flow shower according to any one or more of claims 15 to 17, wherein: it also comprises a inner support sleeve, the inner support sleeve comprises two separate semicircular arc plates (122), and a third through hole (123) is opened on the semicircular arc plate (122), the valve body (120) is provided with two fourth through holes penetrating inner cavity, the periphery of the inner end of the fourth through hole of the valve body (120) extends inwardly to form a ring convex (125); the supporting sleeve is fixedly arranged on the inner cavity of the valve body (120) and between valve body and rotating wall (31), the ring convex is inserted into the third through hole, the water outlet joint part is inserted into the fourth through hole, the inner hole of the water outlet joint forms the water outlet, and the rotating wall is adapted to slide between two semicircular arc plates (122).

19. The low-pressure high-flow shower according to the claim 18, wherein: a sealing ring (38) is set between the third through hole wall and the ring convex (125), and the sealing (38) ring also seals the support sleeve and the valve body (120).

20. The low-pressure high-flow shower according to any one or more of claims 14 to 19, wherein: a shell (126) is also comprised, and the shell is fixed outside the body.

## Patentansprüche

1. Die Hochströmungsdusche mit niedrigem Druck, welche einen befestigten Teil (10), ein Temperatursteuerventil (20) und ein Schaltventil (30) aufweist; das befestigte Teil (10) hat zwei Wassereinlässe (101, 102) und zwei Wasserauslässe (103, 104), und die zwei Wassereinlässe (101, 102) sind entlang der Längsrichtung des befestigten Teils (10) beabstandet, und die zwei Wasserauslässe (103, 104) sind zwischen den zwei Wassereinlässen (101, 102) und sind entlang des befestigten Teils (10) umfangsmäßig beabstandet, das Temperatursteuerventil (20) hat einen Temperatursteuerventilkem (21), und der Temperatursteuerventilkern (20) hat zwei einzelne Wasseranschlüsse und einen Mischwasseranschluss, und das Schaltventil (30) hat einen Schaltventilkern; wobei der Temperatursteuerventilkem (21) in dem befestigten Teil (10) installiert ist und ein einzelner Wasseranschluss ist mit einem Wassereinlass ausgerichtet und verbunden, und der andere Wassereinlass und der andere einzelne Wasseranschluss sind durch ein Durchwasserweg (105) verbunden; der Schaltventilkern weist eine Drehwand (31) auf, welche drehbar mit dem befestigten Teil (10) verbunden ist, die Drehwand ist zwischen den zwei Wassereinlässen (101, 102) angeordnet, die zwei Wasserauslässe (103, 104) sind in Bezug zu der Drehwand (31) umfangsmäßig beabstandet, das innere Loch der Drehwand ist mit dem Mischwasserauslass des Temperatursteuerventilkerns (21) verbunden, ein Durchgangsloch (33), welches sowohl innen als auch außen durchdringt, ist auf der Drehwand angeordnet, das Durchgangsloch (33) kann angeordnet werden, um mit wenigstens einem der zwei Wasserauslässe durch Drehen der Drehwand (31) ausgerichtet zu sein.

2. Die Hochströmungsdusche mit niedrigem Druck nach Anspruch 1, wobei: zwei einzelne Wasseranschlüsse des Temperatursteuerventilkems (21) entlang der Längsrichtung des Temperatursteuerventilkems (21) auf der Umfangswand des Temperatursteuerventilkems (21) angeordnet sind, und der Mischwasseranschluss des Temperatursteuerventilkems auf einem Ende des Temperatursteuerventilkems (21) zu der Drehwand (31) hin angeordnet ist.

3. Die Hochströmungsdusche mit niedrigem Druck nach Anspruch 1 und/oder 2, wobei: das befestigte Teil (10) mit einem ersten Ende und einem zweiten Ende versehen ist, und die zwei Wassereinlässe (101, 102) jeweils der erste Wassereinlass (101) und der zweite Wassereinlass (102) sind, und der erste Wassereinlass (101) und der zweite Wassereinlass (102) jeweils an dem ersten Ende und dem zweiten Ende angeordnet sind, der Temperatursteuerventilkern (21) in den befestigten Teil (10) von dem ersten Ende geladen ist, und ein einzelner Wasseranschluss und der erste Wassereinlass ausgerichtet und verbunden sind, der Durchwasserweg (105) mit dem zweiten Wassereinlass (102) und dem anderen einzelnen Wasseranschluss verbindet, das Temperatursteuerventil (20) ebenfalls einen Temperatursteuergriff (22) hat, welcher mit dem Temperatursteuerventilkem (21) verbunden ist, und der Temperatursteuergriff (22) mit dem ersten Ende des befestigten Teils (10) verbunden ist, das Schaltventil (30) ebenfalls einen Schaltgriff (32), welcher mit der Drehwand (31) verbunden ist, hat, der Schaltgriff (32) mit dem zweiten Ende des befestigten Teils (10) verbunden ist.

4. Die Hochströmungsdusche mit niedrigem Druck nach Anspruch 3, wobei: das Schaltventil (30) ebenfalls einen Schaltschaft (35) hat, welcher in das zweite Ende des befestigten Teils (10) eingesetzt ist und das innere Ende des Schaltventils mit der Drehwand (31) befestigt ist und sein äußeres Ende fest mit dem Schaltgriff (32) verbunden ist.

5. Die Hochströmungsdusche nach einem oder mehreren der Ansprüche 1 bis 4, wobei: das befestigte Teil (10) einen Kupferhauptkörper (106) mit einem Durchgangsloch aufweist, und der Kupferhauptkörper (106) mit einem ersten Wassereinlass (101) und einem zweiten Wassereinlass (102) versehen ist, und die Rohrwand des Kupferhauptkörpers mit dem Durchwasserweg gebildet ist; der Temperatursteuerventilkem (21) in dem Durchgangsloch des Kupferhauptkörpers (106) installiert ist, und der einzelne Wasseranschluss und der innere Anschluss des ersten Wassereinlasses ausgerichtet und verbunden sind, der andere einzelne Wasseranschluss mit dem Ende des Durchwasserwegs (105) ausgerichtet und verbunden ist.

6. Die Hochströmungsdusche mit niedrigem Druck nach Anspruch 5, wobei: das befestigte Teil (10) ebenfalls eine Schafthülse (107) aufweist, wobei die Schafthülse (107) mit zwei umfangsmäßig beabstandeten ersten Durchgangslöchern (109), welche die Schafthülse außen und innen durchdringen, versehen ist; der Kupferhauptkörper (106) mit zwei umfangsmäßig beabstandeten zweiten Durchgangslöchern (110), welche den Kupferhauptkörper außen und innen durchdringen, versehen ist; die Schafthülse (107) in den Kupferhauptkörper (106) gepasst ist und mit dem ersten Durchgangsloch und dem zweiten Durchgangsloch ausgerichtet ist; eine Wasserauslassverbindungseinrichtung (111) ebenfalls vorgesehen ist, welche teilweise in das erste Durchgangsloch von dem zweiten Durchgangsloch eingesetzt ist, und die Schafthülse (107) und den Kupferhauptkörper (106) in der axialen Richtung positioniert; und wobei das innere Loch der Wasserauslassverbindungseinrichtung (111) den Wasserauslass bildet.

7. Die Hochströmungsdusche mit niedrigem Druck nach einem oder mehreren der Ansprüche 1 bis 6, wobei: das befestigte Teil (10) einen Hüllenteil und eine Schafthülse aufweist, das Hüllenteil mit einem Installationsschlitz ausgestattet ist, die Schafthülse mit zwei umfangsmäßig beabstandeten ersten Durchgangslöchern versehen ist; das Hüllenteil mit zwei umfangsmäßig beabstandeten zweiten Durchgangslöchern versehen ist; die Schafthülse in den Installationsschlitz des Hüllenteils gepasst ist, und das erste Durchgangsloch und das zweite Durchgangsloch ausgerichtet sind; die Wasserauslassverbindungseinrichtung ebenfalls vorgesehen ist, welche teilweise in das erste Durchgangsloch von dem zweiten Durchgangsloch eingesetzt wird, und die Schafthülse und das Hüllenteil positioniert; das innere Loch der Wasserauslassverbindungseinrichtung den Wasserauslass bildet.

8. Die Hochströmungsdusche mit niedrigem Druck nach Anspruch 6 und/oder 7, wobei: die Drehwand (31) dazu geeignet ist, drehbar innerhalb der Schafthülse (107) verbunden zu sein.

9. Die Hochströmungsdusche mit niedrigem Druck nach einem oder mehreren der Ansprüche 6 bis 8, wobei: das Schaltventil (30) ebenfalls einen Schaltschaft (35) hat, welcher von der Schafthülse (107) eingesetzt ist und mit dem inneren Ende fest mit der Drehwand (31) verbunden ist, und das äußere Ende fest mit dem Schaltgriff (32) verbunden ist.

10. Die Hochströmungsdusche mit niedrigem Druck nach einem oder mehreren der Ansprüche 6 bis 9, wobei: die Schafthülse (107) einen Leiterhülsenteil hat, und der Leiterhülsenteil ein großes Loch-Teil hat, ein kleines Loch-Teil und eine gestufte Ringwand, die mit dem großen Loch-Teil und dem kleinen Loch-Teil verbunden ist, und die zwei ersten Durchgangslöcher auf dem großen Loch-Teil angeordnet sind, und die Drehwand gepasst ist, um mit dem Inneren des großen Loch-Teils zu verbinden; das Schaltventil ebenfalls einen Schaltschaft hat, welcher sich von einem kleinen Loch-Teil zu einem großen Loch-Teil erstreckt und an der Drehwand befestigt ist, und die gestufte Ringwand ebenfalls die axiale Position der Drehwand (31) anordnet.

11. Die Hochströmungsdusche mit niedrigem Druck nach Anspruch 9 und/oder 10, wobei: der Schaltschaft (35) und die Drehwand (31) durch eine Verbindungseinrichtung (36) verbunden sind, welche an dem Endanschluss der Drehwand abgedichtet und befestigt ist, und das innere Ende des Schaltschafts mit der Verbindungseinrichtung (31) befestigt ist.

12. Die Hochströmungsdusche mit niedrigem Druck nach einem oder mehreren der Ansprüche 1 bis 11, wobei: ein Dichtring (34) zwischen der inneren Endoberfläche des Wasserauslassverbindungseinrichtungsteils (111) und der äußeren Umfangsoberfläche der Drehwand (31) angeordnet ist.

13. Die Hochströmungsdusche mit niedrigem Druck nach Anspruch 12, wobei: das Wasserauslassverbindungseinrichtungsteil (111) eine Wasserauslassverbindungseinrichtung, eine befestigte Hülse (112) und eine dichtende Dichtung (113) aufweist, und der Dichtring zwischen der befestigten Hülse (112) und der Drehwand (31) angeordnet ist, und die Dichtung (113) zwischen der befestigten Hülse (112) und der Wasserauslassverbindungseinrichtung verbunden ist, und die Auslassverbindungseinrichtung mit dem zweiten Durchgangsloch (110) verbunden ist, und die äußere Oberfläche der Dichtung (113) konkav ist.

14. Die Hochströmungsdusche mit niedrigem Druck nach einem oder mehreren der Ansprüche 1 bis 3, wobei: das befestigte Teil (10) einen Hauptkörper (114) aufweist, der Hauptkörper (114) weist ein Verbindungsteil (115) und die erste Installationshülse (116) und die zweite Installationshülse (117), und zwar beabstandet befestigt auf der positiven Seite des Verbindungsteils (115), auf, die Rückseite des Verbindungsteils (115) mit dem ersten Wassereinlass und dem zweiten Wassereinlass angeordnet ist, die Rückseite des Verbindungsteils (115) ebenfalls mit einer Senke ausgespart ist, die Senke mit dem zweiten Wassereinlass verbunden ist, das andere Ende der Unterseite der Senke durch die innere Wand der ersten Installationshülse durchdringt, die Kerbe der Senke mit einer Abdeckplatte (119) fest verbunden ist, wobei die Senke somit einen Durchwasserweg bildet; der erste Wassereinlass durch die innere Wand der ersten Installationshülse läuft, der Temperatursteuerventilkern in der ersten Installationshülse installiert ist, und der einzelne Wasseranschluss und das innere Ende des ersten Einlasses ausgerichtet und verbunden sind, während das Ende des anderen einzelnen Wasseranschlusses mit der Senke ausgerichtet und verbunden ist.

15. Die Hochströmungsdusche mit niedrigem Druck nach Anspruch 14, wobei: ein befestigter Rahmen (118) ebenfalls zwischen der ersten Installationshülse (116) und der zweiten Installationshülse (117) befestigt ist, das befestigte Teil (10) ebenfalls einen Ventilkörper (120) aufweist, welcher in dem befestigten Rahmen (118) befestigt ist, und der Ventilkörper (120) hat einen inneren Hohlraum, das Wasserauslassverbindungseinrichtungsteil fest in dem Ventilkörper (120) installiert ist und sich aus dem Körper erstreckt, und das innere Loch des Wasserauslassverbindungseinrichtungsteils den Wasserauslass bildet, und wobei die Drehwand drehbar mit dem Inneren des Ventilkörperhohlraums verbunden werden kann.

16. Die Hochströmungsdusche mit niedrigem Druck nach Anspruch 15, wobei: das befestigte Teil ebenfalls eine Schafthülse aufweist, welche durch die zweite Installationshülse (117) befestigt ist und an dem Ventilkörper (120) angebracht ist, der Temperatursteuergriff (22) drehbar mit der ersten Installationshülse (116) verbunden ist, und der Schaltgriff drehbar mit der zweiten Installationshülse verbunden ist.

17. Die Hochströmungsdusche mit niedrigem Druck nach Anspruch 16, wobei: das Schaltventil ebenfalls einen Schaltschaft (35) hat, welcher durch die Schafthülse (117) geht, und dessen inneres Ende mit der Drehwand (31) befestigt ist, und sein äußeres Ende mit dem Schaltgriff (32) befestigt ist.

18. Die Hochströmungsdusche mit niedrigem Druck nach einem oder mehreren der Ansprüche 15 bis 17, wobei: sie ebenfalls eine innere Stützhülse aufweist, die innere Stützhülse weist zwei separate halbkreisförmige Bogenplatten (122) auf, und ein drittes Durchgangsloch (123) auf der halbkreisförmigen Bogenplatte (122) geöffnet ist, der Ventilkörper (120) mit zwei vierten Durchgangslöchern versehen ist, welche den inneren Hohlraum durchdringen, der Umfang des inneren Endes des vierten Durchgangslochs des Ventilkörpers (120) sich nach innen erstreckt, um einen konvexen Ring (125) zu bilden; die Stützhülse fest an dem inneren Hohlraum des Ventilkörpers (120) und zwischen Ventilkörper und Drehwand (31) angeordnet ist, der konvexe Ring in das dritte Durchgangsloch eingesetzt ist, das Wasserauslassverbindungseinrichtungsteil in das vierte Durchgangsloch eingesetzt ist, das innere Loch der Wasserauslassverbindungseinrichtung den Wasserauslass bildet, und die Drehwand angepasst ist, zwischen zwei halbkreisförmigen Bogenplatten (122) zu gleiten.

19. Die Hochströmungsdusche mit niedrigem Druck nach Anspruch 18, wobei: ein Dichtring (38) zwischen der dritten Durchgangslochwand und dem konvexen Ring (125) gesetzt ist, und der Dichtring (38) ebenfalls die Stützhülse und den Ventilkörper (120) abdichtet.

20. Die Hochströmungsdusche mit niedrigem Druck nach einem oder mehreren der Ansprüche 14 bis 19, wobei: sie ebenfalls eine Hülle (126) aufweist, und die Hülle außerhalb des Körpers befestigt ist.

## Revendications

1. Douche à basse pression et haut débit, comprenant une partie fixe (10), une vanne de régulation de température (20) et une vanne de commutation (30) ; la partie fixe (10) comporte deux arrivées d'eau (101, 102) et deux sorties d'eau (103, 104), et les deux arrivées d'eau (101, 102) sont espacées le long de la direction longitudinale de la partie fixe (10), et les deux sorties d'eau (103, 104) sont entre les deux arrivées d'eau (101, 102) et espacées circonférentiellement le long de la partie fixe (10), la vanne de régulation de température (20) comporte un noyau de vanne de régulation de température (21), et le noyau de vanne de régulation de température (20) comporte deux orifices d'eau unique et un orifice d'eau de mélange, et la vanne de commutation (30) comporte un noyau de vanne de commutation ; dans laquelle le noyau de vanne de régulation de température (21) est installé dans la partie fixe (10) et un orifice d'eau unique est aligné sur une arrivée d'eau et connectée à celle-ci, et l'autre arrivée d'eau et l'autre orifice d'eau unique sont connectés par une voie d'eau traversante (105) ; le noyau de vanne de commutation comprend une paroi rotative (31) qui est connectée de manière rotative à la partie fixe (10), la paroi rotative est située entre les deux arrivées d'eau (101, 102), les deux sorties d'eau (103, 104) sont espacées circonférentiellement par rapport à la paroi rotative (31), le trou intérieur de la paroi rotative est connecté à la sortie d'eau de mélange du noyau de vanne de régulation de température (21), un trou traversant (33) pénétrant à la fois à l'intérieur et à l'extérieur est agencé sur la paroi rotative, le trou traversant (33) peut être agencé pour s'aligner sur au moins une des deux sorties d'eau par rotation de la paroi rotative (31).

2. Douche à basse pression et haut débit selon la revendication 1, dans laquelle : deux orifices d'eau unique du noyau de vanne de régulation de température (21) sont agencés le long de la direction longitudinale du noyau de vanne de régulation de température (21) sur la paroi périphérique du noyau de vanne de régulation de température (21), et
l'orifice d'eau de mélange du noyau de vanne de régulation de température est agencé sur une extrémité du noyau de vanne de régulation de température (21) vers la paroi rotative (31).

3. Douche à basse pression et haut débit selon la revendication 1 et/ou 2, dans laquelle : la partie fixe (10) est pourvue d'une première extrémité et d'une seconde extrémité, et les deux arrivées d'eau (101, 102) sont respectivement la première arrivée d'eau (101) et la seconde arrivée d'eau (102), et la première arrivée d'eau (101) et la seconde arrivée d'eau (102) sont respectivement agencées à la première extrémité et la seconde extrémité, le noyau de vanne de régulation de température (21) est chargé dans la partie fixe (10) depuis la première extrémité, et un orifice d'eau unique et la première arrivée d'eau sont alignés et connectés, le passage traversant (105) est connecté à la seconde arrivée d'eau (102) et à l'autre orifice d'eau unique, la vanne de régulation de température (20) comporte également une poignée de régulation de température (22) connectée au noyau de vanne de régulation de température (21), et la poignée de régulation de température (22) est connectée à la première extrémité de la partie fixe (10), la vanne de commutation (30) comporte également une poignée de commutation (32) connectée à la paroi rotative (31), la poignée de commutation (32) est connectée à la seconde extrémité de la partie fixe (10).

4. Douche à basse pression et haut débit selon la revendication 3, dans laquelle : la vanne de commutation (30) comporte également un arbre de commutation (35), qui est inséré dans la seconde extrémité de la partie fixe (10) et l'extrémité intérieure de la vanne de commutation est fixée à la paroi rotative (31), et son extrémité externe est connectée de manière fixe à la poignée de commutation (32).

5. Douche à basse pression et haut débit selon l'une des revendications 1 à 4, dans laquelle : la partie fixe (10) comprend un corps principal en cuivre (106) avec un trou traversant, et le corps principal en cuivre (106) est pourvu d'une première arrivée d'eau (101) et d'une seconde arrivée d'eau (102), et la paroi de tuyau du corps principal en cuivre est formée de la voie d'eau traversante ; le noyau de vanne de régulation de température (21) est installé dans le trou traversant du corps principal en cuivre (106), et l'orifice d'eau unique et l'orifice intérieur de la première arrivée d'eau sont alignés et connectés, l'autre orifice d'eau unique est aligné et connecté à l'extrémité dé la voie d'eau traversante (105).

6. Douche à basse pression et haut débit selon la revendication 5, dans laquelle : la partie fixe (10) comprend également un manchon d'arbre (107), le manchon d'arbre (107) est pourvu de deux premiers trous traversants circonférentiellement espacés (109) pénétrant l'extérieur et l'intérieur du manchon d'arbre ; le corps principal en cuivre (106) est pourvu de deux deuxièmes trous traversants circonférentiellement espacés (110) pénétrant l'extérieur et l'intérieur du corps principal en cuivre ; le manchon d'arbre (107) est monté dans le corps principal en cuivre (106) et est aligné sur le premier trou traversant et le deuxième trou traversant ; un raccord de sortie d'eau (111) est également prévu, qui s'insère partiellement dans le premier trou traversant depuis le deuxième trou traversant, et positionne le manchon d'arbre (107) et le corps principal en cuivre (106) dans la direction axiale ; et dans laquelle le trou intérieur du raccord de sortie d'eau (111) forme la sortie d'eau.

7. Douche à basse pression et haut débit selon l'une des revendications 1 à 6, dans laquelle : la partie fixe (10) comprend une partie coque et un manchon d'arbre, la partie coque est équipée d'une fente d'installation, le manchon d'arbre est pourvu de deux premiers trous traversants espacés circonférentiellement ; la partie coque est pourvue de deux deuxièmes trous traversants espacés circonférentiellement ; le manchon d'arbre est monté dans la fente d'installation de la partie coque, et le premier trou traversant et le deuxième trou traversant sont alignés ; le raccord de sortie d'eau est également prévu, qui s'insère partiellement dans le premier trou traversant depuis le deuxième trou traversant, et positionne le manchon d'arbre et la partie coque ; le trou intérieur du raccord de sortie d'eau forme la sortie d'eau.

8. Douche à basse pression et haut débit selon la revendication 6 et/ou 7, dans laquelle : la paroi rotative (31) est adaptée pour être connectée de manière rotative au manchon d'arbre (107).

9. Douche à basse pression et haut débit selon l'une des revendications 6 à 8, dans laquelle : la vanne de commutation (30) comporte également un arbre de commutation (35), qui est inséré depuis le manchon d'arbre (107) et connecté de manière fixe par l'extrémité intérieure à la paroi rotative (31), et l'extrémité extérieure est connectée de manière fixe à la poignée de commutation (32).

10. Douche à basse pression et haut débit selon l'une des revendications 6 à 9, dans laquelle : le manchon d'arbre (107) comporte une partie manchon échelle, et la partie manchon échelle possède une partie grand trou, une partie petit trou et une paroi annulaire étagée connectée à la partie grand trou et à la partie petit trou, et les deux premiers trous traversants sont agencés sur la partie grand trou, et la paroi rotative est montée pour se connecter à l'intérieur de la partie grand trou ; la vanne de commutation comporte également un arbre de commutation, qui s'étend depuis une partie petit trou jusqu'à une partie grand trou et est fixé à la paroi rotative, et la paroi annulaire étagée situe également la position axiale de la paroi rotative (31).

11. Douche à basse pression et haut débit selon la revendication 9 et/ou 10, dans laquelle : l'arbre de commutation (35) et la paroi rotative (31) sont connectés par un raccord (36), qui est scellé et fixé à l'orifice d'extrémité de la paroi rotative, et l'extrémité intérieure de l'arbre de commutation est fixée au raccord (31).

12. Douche à basse pression et haut débit selon l'une des revendications 1 à 11, dans laquelle : un anneau d'étanchéité (34) est agencé entre la surface d'extrémité intérieure de la partie raccord de sortie d'eau (111) et la surface périphérique extérieure de la paroi rotative (31).

13. Douche à basse pression et haut débit selon la revendication 12, dans laquelle : la partie raccord de sortie d'eau (111) comprend un raccord de sortie d'eau, un manchon fixe (112) et une garniture d'étanchéité (113), et l'anneau d'étanchéité est agencé entre le manchon fixe (112) et la paroi rotative (31), et la garniture (113) est connectée entre le manchon fixe (112) et le raccord de sortie d'eau, et le raccord de sortie est connecté au deuxième trou traversant (110), et la surface extérieure de la garniture (113) est concave.

14. Douche à basse pression et haut débit selon l'une des revendications 1 à 3, dans laquelle : la partie fixe (10) comprend un corps principal (114), le corps principal (114) inclut une partie de connexion (115) et le premier manchon d'installation (116) et le second manchon d'installation (117) fixés de manière espacée sur la face positive de la partie de connexion (115), l'arrière de la partie de connexion (115) est agencé avec la première arrivée d'eau et la seconde arrivée d'eau, l'arrière de la partie de connexion (115) est également évidé avec un puits, le puits est connecté à la seconde arrivée d'eau, l'autre extrémité du fond du puits pénètre à travers la paroi intérieure du premier manchon d'installation, l'encoche du puits est connectée de manière fixe à une plaque de protection (119), le puits constituant ainsi une voie d'eau traversante ;
la première arrivée d'eau s'étale à travers la paroi intérieure du premier manchon d'installation, le noyau de vanne de régulation de température est installé dans le premier manchon d'installation, et l'orifice d'eau unique et l'extrémité intérieure de la première arrivée sont alignés, alors que l'extrémité de l'autre orifice d'eau unique est alignée et connectée au puits.

15. Douche à basse pression et haut débit selon la revendication 14, dans laquelle : un cadre fixe (118) est également fixé entre le premier manchon d'installation (116) et le second manchon d'installation (117), la partie fixe (10) inclut également un corps de vanne (120), qui est fixé dans le cadre fixe (118), et le corps de vanne (120) comporte une cavité intérieure, la partie raccord de sortie d'eau est installée de manière fixe dans le corps de vanne (120) et s'étend hors du corps, et le trou intérieur de la partie raccord de sortie d'eau forme la sortie d'eau, et dans laquelle la paroi rotative peut être connectée de manière rotative à l'intérieur de la cavité de corps de vanne.

16. Douche à basse pression et haut débit selon la revendication 15, dans laquelle : la partie fixe (10) inclut également un manchon d'arbre, qui est fixé à travers le second manchon d'installation (117) et est attaché au corps de vanne (120), la poignée de régulation de température (22) est connectée de manière rotative au premier manchon d'installation (116), et la poignée de commutation est connectée de manière rotative au second manchon d'installation.

17. Douche à basse pression et haut débit selon la revendication 16, dans laquelle : la vanne de commutation comporte également un arbre de commutation (35), qui traverse le manchon d'arbre (117) et dont l'extrémité intérieure est fixée à la paroi rotative (31), et son extrémité extérieure est fixée à la poignée de commutation (32).

18. Douche à basse pression et haut débit selon l'une des revendications 15 à 17, dans laquelle : elle comprend également un manchon de support intérieur, le manchon de support intérieur comprend deux plaques séparées en demi-arc de cercle (122), et un troisième trou traversant (123) est ouvert sur la plaque en demi-arc de cercle (122), le corps de vanne (120) est pourvu de deux quatrièmes trous traversants pénétrant la cavité intérieure, la périphérie de l'extrémité intérieure du quatrième trou traversant du corps de vanne (120) s'étend vers l'intérieur pour former un anneau convexe (125) ; le manchon de support est agencé de manière fixe sur la cavité intérieure du corps de vanne (120) et entre le corps de vanne et la paroi rotative (31), l'anneau convexe est inséré dans le troisième trou traversant, la partie raccord de sortie d'eau est insérée dans le quatrième trou traversant, le trou intérieur du raccord de sortie d'eau forme la sortie d'eau, et la paroi rotative est adaptée pour coulisser entre deux plaques en demi-arc de cercle (122).

19. Douche à basse pression et haut débit selon la revendication 18, dans laquelle : un anneau d'étanchéité (38) est placé entre la paroi à troisième trou traversant et l'anneau convexe (125), et l'anneau d'étanchéité (38) scelle également le manchon de support et le corps de vanne (120).

20. Douche à basse pression et haut débit selon l'une des revendications 14 à 19, dans laquelle : une coque (126) est également comprise, et la coque est fixée à l'extérieur du corps.
